# EUROPEAN PATENT APPLICATION

(11) **EP 3 913 642 A1**
(43) Date of publication of application: **24.11.2021**
(21) Application number: 21174926.2
(22) Date of filing: 20.05.2021
(51) Int. Cl.: H01B 7/08, H01B 7/42

(54) **ELECTRICAL FLAT CABLE WITH AT LEAST ONE COOLING CHANNEL, ASSEMBLY WITH SUCH A FLAT CABLE AND USE OF SUCH A FLAT CABLE**

(30) Priority: 20.05.2020 DE 102020206386
(71) Applicant: TE Connectivity Germany GmbH, 64625 Bensheim (DE)
(72) Inventor: Dressel, Andre Martin, 68623 Lampertheim (DE); Brabetz, Florian, 64579 Gernsheim (DE); Blumenschein, Rudi, 73479 Ellwangen (DE); Toth, Gerzson, 68307 Mannheim (DE); Hauck, Uwe, 14532 Kleinmachnow (DE)
(74) Representative: Grünecker Patent- und Rechtsanwälte PartG mbB

(57) **Abstract**

The present invention offers a selectively acting, space and costs-saving cooling measure for electrical applications by providing an electrical flat cable (1) comprising at least one core (4) with at least one core sheath (6), at least one cooling channel (8) with at least one cooling channel sheath (10) and at least one web (12), wherein the at least one core (4) and the at least one cooling channel (8) extend mutually parallel, and wherein the at least one web (12) extends along the at least one core (4) and the at least one cooling channel (8) and integrally joins the at least one core sheath (6) with the at least one cooling channel sheath (10). The present invention further relates to an assembly (2) with such an electrical flat cable (1) and a battery (34) as well as to a use of such an electrical flat cable (1) for cooling a battery (34).

## Description

The present invention relates to an electrical flat cable, for example, a flexible flat cable with at least one integrated cooling channel. The present invention further relates to an assembly, for example, a battery assembly with such an electrical flat cable and the use of such an electrical flat cable for cooling, for example, but not exclusively, a battery assembly.

Batteries comprising at least one cell, typically several cells, are used in the field of electromobility. These cells are often connected by electrical flat cables which mostly run along the upper side of the cells. However, the cells are typically only cooled on an underside of the cells facing away from the flat cable so that the dissipation heat from electrochemical charging and discharging processes in the cells can create a considerable thermal gradient over the height of the cells.

Consequently, the present invention is based on the object of preventing the development of high thermal gradients in battery cells and in other electrotechnical devices without increasing the required installation space which is subject to strict specifications, in particular in the field of electromobility.

This object is achieved by an electrical flat cable comprising at least one core with at least one core sheath, at least one cooling channel with at least one cooling channel sheath and at least one web, wherein the at least one core and the at least one cooling channel extend mutually parallel, and wherein the at least one web extends along the at least one core and the at least one cooling channel and integrally joins the at least one core sheath and the at least one cooling channel sheath with one another.

By integrating the at least one cooling channel into the electrical flat cable, the available installation space is used efficiently and this results in a space-saving active cooling measure. The resulting cooling effect not only affects the at least one core but can also affect the surrounding of the electrical flat cable, i.e. for example, the battery cells in the vicinity. Furthermore, due to the extension parallel to the at least one core, the at least one cooling channel also easily reaches places where electrical waste heat is generated since places where such waste heat arises often coincide with places where a flat cable is led past. As part of an installation of the flat cable according to the invention, additional costs for laying a separate cooling line can ultimately be saved since the at least one cooling channel is already incorporated integrally in the flat cable and can therefore be co-attached when the at least one core is laid.

The invention can be further improved by the following embodiments which are advantageous in themselves and which can be arbitrarily combined with one another.

To improve the manageability of the flat cable according to the invention during installation, the flat cable according to the invention can be designed to be flexible. The at least one core sheath, the at least one cooling channel sheath, the at least one cooling channel, and the at least one web can preferably be produced from flexible material. The at least one core can accordingly be produced from electrically conductive and flexible material.

According to a further embodiment of the invention, the at least one core sheath and/or the at least one cooling channel sheath and/or the at least one web are each produced from electrically insulating material in order to ensure the electrical safety of the flat cable according to the invention. In particular, the at least one core and the at least one cooling channel are spaced apart from one another by the at least one core sheath and/or the at least one cooling channel sheath and/or the at least one web.

The at least one core sheath and/or the at least one cooling channel sheath and/or the at least one web are preferably made of polyvinyl chloride (PVC). Even with a small material thickness, this material is characterized by high dielectric strength, i.e. high electrical insulation properties. Small material thicknesses are particularly advantageous with regard to the at least one cooling channel sheath and the improved cooling effect due to the correspondingly lower thermal resistance. Other plastic materials can of course also be used.

Depending on the selection of materials for the at least one core sheath, the at least one cooling channel sheath, and the at least one web, the flat cable according to the invention can be an extruded flat cable or a laminated flat cable.

The at least one core sheath and the at least one cooling channel sheath and the at least one web are optionally produced from integrally formed material, i.e. made of the same material as one workpiece. This optional embodiment is characterized by particularly simplified manufacturability.

A further simplification of the manufacturability of the flat cable according to the invention can be obtained if the at least one cooling channel is shaped by a cavity produced in the at least one cooling channel sheath. This embodiment makes it possible, for example, to use conventional manufacturing methods for electrical flat cables with at least two cores for manufacturing the flat cable according to the invention, wherein said cavity is created by intentionally omitting at least one core.

According to an alternative embodiment, a wall, in particular an inner wall, of the at least one cooling channel can be made from a different material than the at least one cooling channel sheath. A different material is given where different chemical and/or physical and/or mechanical properties are present. The inner wall of the at least one cooling channel can be formed in particular by a tube embedded in the at least one cooling channel sheath. The tube is, for example, coextruded with the at least one cooling channel sheath. The resulting flexibility in the selection of materials for the tube allows the flat cable according to the invention to be provided with a higher compressive strength and/or temperature resistance.

Improved mechanical stability of the electrical flat cable is achieved if the at least one web extends continuously along the at least one core and the at least one cooling channel. The at least one web can there be a material bridge which continuously connects the at least one core sheath and the at least one cooling channel sheath with one another along a direction of extension of the electrical flat cable.

Alternatively, the at least one web can comprise at least one discontinuation to save material costs and/or weight. The at least one web configured as a material bridge can connect the at least one core sheath and the at least one cooling channel sheath in particular discontinuously along the direction of extension of the electrical flat cable. Again, alternatively, the at least one web can be formed by spacers that run transverse to the direction of extension of the electrical flat cable and that are arranged at regular or irregular intervals along the direction of extension of the electrical flat cable.

According to a further embodiment, the at least one core and/or the at least one cooling channel in a cross section of the electrical flat cable can have a rectangular profile, in particular in a cross section perpendicular to the direction of extension of the electrical flat cable. The respective rectangular profile is preferably oriented flat so that the lowest possible installation height arises for the flat cable according to the invention. The installation height describes an external dimension of the electrical flat channel which is measured perpendicular to the direction of extension of the electrical flat cable and perpendicular to a direction of arrangement of the at least one core and the at least one cooling channel. Alternatively, the at least one core and/or the at least one cooling channel can have a square, round, or oval profile.

According to a further embodiment, the at least one web can be part of a cable jacket of the electrical flat cable, wherein the at least one core and/or the at least one cooling channel are embedded in the cable jacket. For example, the at least one core is a copper conductor embedded in the cable jacket. The term "embedded" presently describes that the at least one core and/or the at least one cooling channel are surrounded on all sides by the cable jacket in at least one cross section of the electrical flat cable perpendicular to the direction of extension. The cable jacket can be formed by the at least one web and the at least one core sheath and/or the at least one cooling channel sheath. Accordingly, the cable jacket assumes the function of an electrical insulation and protects the at least one core and the at least one cooling channel from external mechanical, chemical, and/or thermal effects.

According to a further embodiment, the electrical flat cable can furthermore comprise at least one connection member for the inlet and/or outlet of a preferably liquid coolant. This makes it possible to connect the at least one cooling channel to a coolant source and/or coolant sink for the purpose of cooling by convective heat transfer. For example, a coolant circuit can be tapped via the at least one connection member. In particular, the coolant can be passed into and/or out of the at least one cooling channel via the at least one connection member.

The at least one connection member can be disposed at one end of the electrical flat cable. Alternatively, the at least one connection member can also be arranged as a T-member between two ends of the electrical flat cable.

The separation between the at least one core and the at least one cooling channel is ensured preferably on the at least one connection member.

According to a further possible embodiment, the electrical flat cable can comprise at least two cores and/or at least two cooling channels which extend through the electrical flat cable spaced from one another. The former ensures a greater electrical transmission capacity due to a larger cross-sectional area of the core, while the latter increases the cooling capacity due to a larger cooling surface.

The cores and/or the cooling channels preferably each run mutually parallel, wherein one cooling channel is disposed between two adjacent cores and/or one core is disposed between two adjacent cooling channels. The cores and cooling channels in the flat cable according to the invention are arranged in particular adjacent to one another along a direction of arrangement perpendicular to the direction of extension of the flat cable and, in particular, do not take up any additional space for installation height. Space for installation height presently refers to the installation space that is taken up by the electrical flat cable due to the installation height already defined.

The cores and the cooling channels can optionally be arranged alternately in the electrical flat cable. This means that cores and cooling channels are arranged alternately transverse to the direction of extension of the electrical flat cable. For example, the cooling channels run in place of individual cores in the electrical flat cable. Alternatively, the cooling channels can also each run between adjacent cores. The alternating arrangement results in homogeneously distributed cooling.

In an electrical flat cable with at least two cooling channels, the at least two, in particular all cooling channels, can be connected to one another at at least one connection point. In this way, the cooling channels can be connected in parallel so that the coolant is evenly distributed over the cooling channels at the at least one connection point. The at least one connection point can be disposed in the at least one connection member of the electrical flat cable.

An arrangement with an electrical flat cable in accordance with one of the preceding embodiments and with a battery comprising at least one cell likewise achieves the object set out above. The at least one core of the electrical flat cable is there in electrical contact with the at least one cell of the battery. For example, the at least one core is in contact with a high-voltage connection of the at least one cell or a sensor of the at least one cell for the purpose of reading out a measurement signal. In the latter case, in particular, the electrical contact can be established by way of insulation displacement terminals perpendicular to the direction of extension and perpendicular to the direction of arrangement.

In accordance with the advantages of the flat cable according to the invention already explained, the space-saving and cost-saving property of the present invention also comes into play in the assembly according to the invention. In particular, installation space which is already provided for routing a measurement signal line and/or power supply line can also be effectively used for cooling purposes of the at least one cell. The electrical flat cable then advantageously fulfills a dual function of cell connection and cooling. This is advantageous, for example, in battery applications with an active cell management system.

According to an optional embodiment, the at least one cell of the battery can be a pouch cell. In this embodiment, the typically space-saving and/or weight-saving property of the non-housing pouch cell design can be exploited.

Alternatively, the at least one cell of the battery can be a cylindrical cell, a prismatic cell, or any other type of galvanic cell.

According to a further embodiment, the battery can comprise at least two cells which are connected to one another by way of a cell connector, preferably a plate-shaped cell connector, wherein the electrical flat cable touches the cell connector at least in sections. As already mentioned at the outset and as is common in conventional battery assemblies, the cell connector can be arranged in particular on an upper side of the at least two cells. The cell connector would then be disposed outside the direct range of action of conventional battery cooling measures, such as battery cooling plates, which are typically disposed below the cells. The present embodiment is therefore advantageous since the contact between the electrical flat cable and the cell connector makes it possible to directly cool the cell connector or the top of the at least two cells, respectively. The development of high thermal gradients over the height of the at least two cells can then be counteracted.

The assembly according to the invention can of course also be cooled by a battery cooling plate.

The electrical flat cable preferably runs along the entire cell connector so that the electrical flat cable reaches a first cell of the battery and a last cell of the battery. In other words, the electrical flat cable reaches the two outermost cells of a lineup of at least two cells. The cooling effect can therefore also develop at any connection point, for example, high-voltage connections, which are typically arranged on the first and the last cell of a battery.

In order to prevent the electrical flat cable from coming loose unintentionally, the electrical flat cable in a further embodiment can be adhesively bonded to the cell connector. Adhesively bonding the electrical flat cable also ensures good thermal contact between the electrical flat cable and the cell connector. Depending on the selection of adhesive, improved heat transfer between the cell connector and the electrical flat cable can also be achieved.

Adhesive bonding can take place over the entire contact length between the electrical flat cable and the cell connector. Local detachment of the electrical flat cable from the cell connector in the event of vibrations or oscillations can then be prevented entirely.

Alternatively, the electrical flat cable and the cell connector can be adhesively bonded only in individual sections. With this embodiment, firstly, adhesive can be saved and, secondly, better expansion compensation can be obtained, e.g. in the event of thermal stresses.

Instead of adhesive bonding, the electrical flat cable can also be attached to the cell connector by screwing, welding, soldering, riveting or in other manner.

The object set out at the outset can also be satisfied by the use of an electrical flat cable according to one of the preceding embodiments for cooling a battery comprising at least one cell, wherein a coolant, preferably liquid coolant, flows through the at least one cooling channel of the electrical flat cable. Due to the advantages of the flat cable according to the invention explained above, the use according to the invention also represents a space-saving and cost-saving cooling measure. In addition, cooling by convective heat transfer by way of the at least one cooling channel leads to selective effectiveness of the cooling measure, for example, to prevent high thermal gradients over the height of the at least one cell.

For example, a water-glycol mixture can be used as the coolant. Alternatively, other technical coolants or mixtures thereof can also be used.

The invention shall be explained in more detail hereafter with reference to the drawings using several embodiments, the different features of which can be combined with one another arbitrarily in accordance with the above remarks.
- Fig. 1: shows a front view of a schematic sectional illustration of an electrical flat cable of the invention according to a possible embodiment;
- Fig. 2: shows a schematic perspective sectional illustration of an electrical flat cable of the invention according to a further embodiment;
- Fig. 3: shows a schematic perspective illustration of an assembly of the invention according to an exemplary embodiment; and
- Fig. 4: shows a schematic illustration of a circuit diagram of an assembly of the invention according to a further exemplary embodiment.

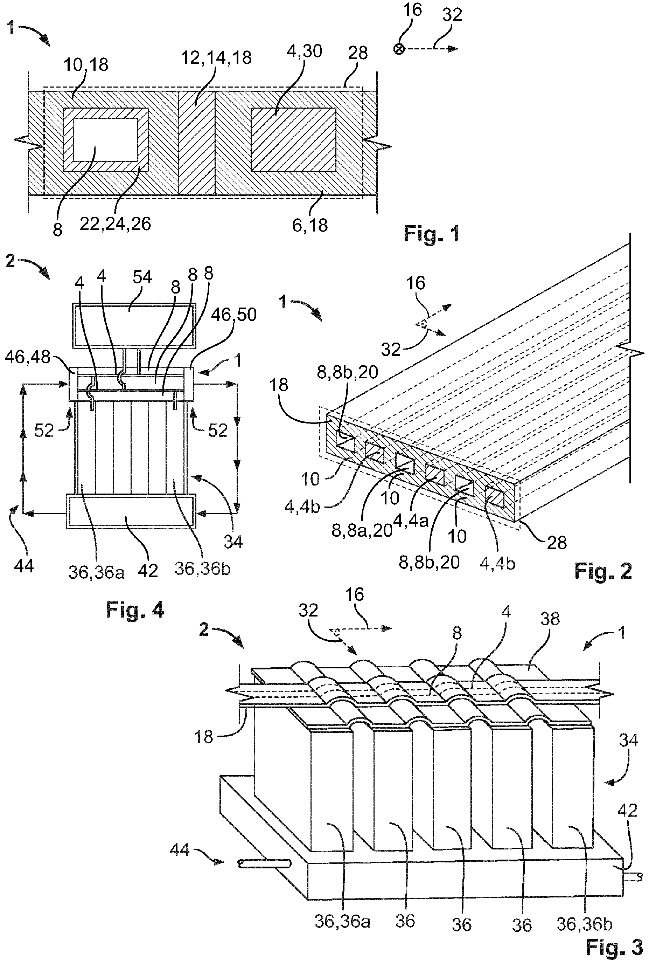

The schematic structure of an electrical flat cable 1 according to the invention shall first be explained with reference to Figures 1 and 2. The schematic structure of an assembly 2 according to the invention shall then be described with reference to Figures 3 and 4. Use according to the invention shall finally be explained with reference to Figure 4.

As shown in Figure 1, electrical flat cable 1 according to the invention can comprise at least one core 4 with at least one core sheath 6, at least one cooling channel 8 with at least one cooling channel sheath 10, and at least one web 12. The at least one web 12 there integrally connects the at least one core sheath 6 and the at least one cooling channel sheath 10 to one another. Furthermore, the at least one core 4 and the at least one cooling channel 8 are spaced from one another by the at least one core sheath 6 and/or the at least one cooling channel sheath 10 and/or the at least one web 12.

At least one web 12 can extend along the at least one core 4 and the at least one cooling channel 8. For example, the at least one web 12 can be a material bridge 14 which continuously or discontinuously connects the at least one core sheath 6 and the at least one cooling channel sheath 10 to one another along a direction of extension 16 of electrical flat cable 1. In the case of the discontinuous connection, material bridge 14 can comprise discontinuations (not shown). Alternatively, the at least one web 12 can be formed by spacers (not shown) running transverse to direction of extension 16 of electrical flat cable 1. The spacers can be arranged along direction of extension 16 of electrical flat cable 1 at regular or irregular intervals.

As can also be seen in Figure 1, the at least one core sheath 6 and/or the at least one cooling channel sheath 10 and/or the at least one web 12 can each be produced from different materials, i.e. they can differ in the chemical and/or physical and/or mechanical properties. Alternatively, the at least one core sheath 6, the at least one cooling channel sheath 10, and the at least one web 12 can be produced from the same material. This is illustrated in Figure 2. There, the at least one core sheath 6, the at least one cooling channel sheath 10, and the at least one web 12 together form a cable jacket 18 of electrical flat cable 1. Cable jacket 18 can preferably be produced from electrically insulating material, such as polyvinyl chloride (PVC).

Electrical flat cable 1 can comprise at least two cores 4 and/or at least two cooling channels 8 which each extend through electrical flat cable 1 spaced from one another. In the embodiment shown in Figure 2, electrical flat cable 1 is shown by way of example with three cores 4 and three cooling channels 8. As can also be seen in Figure 2, cores 4 and cooling channels 8 extend mutually parallel.

A respective cooling channel 8 can be disposed between two adjacent cores 4a, 4b and/or a respective core 4 can be disposed between two adjacent cooling channels 8a, 8b. In other words, cores 4 and cooling channels 8 in electrical flat cable 1 are arranged next to one another along a direction of arrangement 32. Cores 4 and cooling channels 8 can be arranged in particular alternately in electrical flat cable 1. This means, cores 4 and cooling channels 8 are arranged alternately transverse to direction of extension 16 of electrical flat cable 1.

The at least one cooling channel 8 is integrated into electrical flat cable 1. For example, the at least one cooling channel 8 can be formed by a cavity 20 created in the at least one cooling channel sheath 10. All of cooling channels 8 in Figure 2 are formed by cavities 20, wherein cavities 20 are each created in a cooling channel sheath 10 which forms part of cable jacket 18.

Alternatively, a wall 22, in particular an inner wall 24 of the at least one cooling channel 8, can be made from a different material than the at least one cooling channel sheath 10. Inner wall 24 can be formed in particular by a tube 26 embedded in the at least one cooling channel sheath 10. In other words, tube 26 is surrounded on all sides by the at least one cooling channel sheath 10 or by cable jacket 18, respectively, in at least one cross section 28 of the electrical flat cable perpendicular to direction of extension 16. The at least one core 4 can accordingly be a copper conductor 30 embedded in the at least one core sheath 6 or in cable jacket 18. This is illustrated in Figure 1.

The at least one core 4 and/or the at least one cooling channel 8, respectively, in a cross section of electrical flat cable 1 can have a rectangular profile, in particular in cross section 28 perpendicular to direction of extension 16 of electrical flat cable 1. The respective rectangular profile is preferably oriented to be flat. This means, the long edges of the respective rectangular profile are parallel to direction of arrangement 32 of the at least one core 4 and the at least one cooling channel 8. Alternatively, the at least one core 4 and/or the at least one cooling channel 8 can have a square, round or oval profile.

Figures 3 and 4 show possible embodiments of an assembly 2 according to the invention. Assembly 2 can comprise an electrical flat cable 1 according to the embodiments described above and a battery 34 with at least one cell 36. The at least one core 4 of electrical flat cable 1 is there in electrical contact with the at least one cell 36 of battery 34. For example, the at least one core 4 is in contact with a high-voltage connection (not shown) or a sensor (not shown) of the at least one cell 36. In the case of a sensor contact, the sensor measurement data that has been read out can be passed via the at least one core 4, for example, to an active cell management system 54 (see Figure 4).

The at least one cell 36 can be, for example, a pouch cell, a cylindrical cell, a prismatic cell, or any other type of galvanic cell.

Battery 34 can comprise at least two cells 36 which are connected to one another by way of a cell connector 38. Figure 3 shows battery 34 with five cells 36 by way of example. Electrical flat cable 1 there touches cell connector 38 at least in sections. Electrical flat cable 1 runs in particular along entire cell connector 38, so that electrical flat cable 1 reaches a respective first cell 36a of battery 34 and a last cell 36b of battery 34.

It can also be seen in Figure 3 that flat cable 1 according to the invention can be configured to be flexible. Electrical flat cable 1 can adapt in particular to an uneven surface structure of cell connector 38 and nestle against cell connector 38. Electrical flat cable 1 can be adhesively bonded to cell connector 38 over the entire contact length between electrical flat cable 1 and cell connector 38. Alternatively, electrical flat cable 1 and cell connector 8 can be adhesively bonded only in individual sections. Instead of adhesive bonding, electrical flat cable 1 can also be attached to cell connector 38 by screwing, welding, soldering, riveting or in other manner.

Assembly 2 according to the invention in Figures 3 and 4 is also shown with a battery cooling plate 42. Battery cooling plate 42 can be arranged as part of a coolant circuit 44 for cooling battery 34 below cells 36. Electrical flat cable 1 according to the invention can also be used to cool battery 34. According to this use of the invention shown in Figure 4, liquid coolant can be tapped from coolant circuit 44 and flow through the at least one cooling channel 8 of electrical flat cable 1.

For this purpose, electrical flat cable 1 can comprise at least one connection member 46 for an inlet 48 and/or outlet 50 for the coolant. Figure 4 shows electrical flat cable 1 with a connection member 46 each for inlet 48 and outlet 50 with which the coolant can be delivered into or out of three cooling channels 8 shown. Connection members 46 are each disposed at one end 52 of electrical flat cable 1. Alternatively, the at least one connection member 46 can also be arranged as a T-member between two ends 52 of electrical flat cable 1.

All cooling channels 8 in connection members 46 can each be connected to one another at a connection point. This means, the coolant at connection member 46 for inlet 48 is evenly distributed to respective cooling channels 8 at the respective connection point. Analogously, the coolant is merged at connection member 46 for outlet 50.

### Reference numerals

- 1: electrical flat cable
- 2: assembly
- 4 4a 4b: core
- 6: core sheath
- 8, 8a, 8b: cooling channel
- 10: cooling channel sheath
- 12: web
- 14: material bridge
- 16: direction of extension
- 18: cable jacket
- 20: cavity
- 22: wall
- 24: inner wall
- 26: tube
- 28: cross section
- 30: copper conductor
- 32: direction of arrangement
- 34: battery
- 36, 36a, 36b: cell
- 38: cell connector
- 42: battery cooling plate
- 44: coolant circuit
- 46: connection member
- 48: inlet
- 50: outlet
- 52: end
- 54: cell management system

## Claims

1. Electrical flat cable (1) comprising at least one core (4) with at least one core sheath (6), at least one cooling channel (8) with at least one cooling channel sheath (10) and at least one web (12), wherein said at least one core (4) and said at least one cooling channel (8) extend mutually parallel, and wherein said at least one web (12) extends along said at least one core (4) and said at least one cooling channel (8) and integrally joins said at least one core sheath (6) and said at least one cooling channel sheath (10) with one another.

2. Electrical flat cable (1) according to claim 1, wherein said at least one cooling channel (8) is formed by a cavity (20) produced in said at least one cooling channel sheath (10).

3. Electrical flat cable (1) according to claim 1 or 2, wherein a wall (22, 24) of said at least one cooling channel (8) is produced from a different material than said at least one cooling channel sheath (10).

4. Electrical flat cable (1) according to one of the claims 1 to 3, wherein said at least one core (4) and/or said at least one cooling channel (8) in a cross section (28) have a rectangular profile.

5. Electrical flat cable (1) according to one of the claims 1 to 4, wherein said at least one web (12) is part of a cable jacket (18) of said electrical flat cable (1) and wherein said at least one core (4) and/or said at least one cooling channel (8) are embedded in said cable jacket (18).

6. Electrical flat cable (1) according to one of the claims 1 to 5, wherein said electrical flat cable (1) comprises at least one connection member (46) for an inlet (48) and/or outlet (50) for a coolant.

7. Electrical flat cable (1) according to one of the claims 1 to 6, wherein said electrical flat cable (1) comprises at least two cores (4, 4a, 4b) and/or at least two cooling channels (8, 8a, 8b) which extend through said electrical flat cable (1) spaced from one another.

8. Electrical flat cable (1) according to claim 7, wherein a cooling channel (8) is disposed between two adjacent cores (4a, 4b) and/or a core (4) is disposed between two adjacent cooling channels (8a, 8b).

9. Electrical flat cable (1) according to claim 7 or 8, wherein said cooling channels (8, 8a, 8b) are connected to one another at at least one connection point.

10. Electrical flat cable (1) according to one of the claims 1 to 9, wherein said cores (4, 4a, 4b) and said cooling channels (8, 8a, 8b) are arranged alternately in said electrical flat cable (1).

11. Assembly (2) with an electrical flat cable (1) according to one of the claims 1 to 10 and with a battery (34) comprising at least one cell (36), wherein said at least one core (4) of said electrical flat cable (1) is in electrical contact with said at least one cell (36).

12. Assembly (2) according to claim 11, wherein said at least one cell (36) is a pouch cell.

13. Assembly (2) according to claim 11 or 12, wherein said battery (34) comprises at least two cells (36, 36a, 36b) which are connected to one another by way of a cell connector (38) and wherein said electrical flat cable (1) touches said cell connector (38) at least in sections.

14. Assembly (2) according to claim 13, wherein said electrical flat cable (1) is adhesively bonded to said cell connector (38).

15. Use of an electrical flat cable (1) according to one of the claims 1 to 10 for cooling a battery (34) comprising at least one cell (36), wherein coolant flows through said at least one cooling channel (8) of said electrical flat cable (1).
